(19) Europäisches Patentamt European Patent Office Office européen des brevets

(11) **EP 4 700 838 A1**

(12) **EUROPEAN PATENT APPLICATION**

(43) Date of publication:
**25.02.2026 Bulletin 2026/09**

(21) Application number: 25192479.1

(22) Date of filing: **29.07.2025**

(51) International Patent Classification (IPC):
*H01M 4/13* (2010.01)        *H01M 4/62* (2006.01)
*H01M 10/052* (2010.01)      *H01M 10/0525* (2010.01)
*H01M 10/0562* (2010.01)

(52) Cooperative Patent Classification (CPC):
**H01M 10/052; H01M 10/0525; H01M 10/0562;**
H01M 4/0447; H01M 2300/0068

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **30.07.2024  KR 20240101145
11.07.2025  KR 20250093941**

(71) Applicant: **SAMSUNG SDI CO., LTD.
Yongin-si, Gyeonggi-do 17084 (KR)**

(72) Inventor: **JUNG, Mijung
17084 Yongin-si, Gyeonggi-do (KR)**

(74) Representative: **Michalski Hüttermann & Partner
Patentanwälte mbB
Kaistraße 16A
40221 Düsseldorf (DE)**

(54) **SOLID ELECTROLYTE LAYER FOR ALL-SOLID-STATE BATTERY AND ALL-SOLID-STATE BATTERY INCLUDING SAME**

(57) Example embodiments include a solid electrolyte layer for an all-solid-state rechargeable battery, and an all-solid-state rechargeable battery including the solid electrolyte layer. The solid electrolyte layer for an all-solid-state rechargeable battery include a sulfide-based solid electrolyte, and a composite of a plasticizer that is solid at room temperature and liquid at a temperature greater than or equal to 60 °C and a lithium salt, and a content of the composite is in a range of $\geq 1$ wt% to $\leq 4$ wt% based on 100 wt% of the solid electrolyte layer.

## FIG. 1

**Description**

**BACKGROUND**

**1. Field**

Examples of the present disclosure relate to a solid electrolyte layer for an all-solid-state rechargeable battery, and an all-solid-state rechargeable battery including the solid electrolyte layer.

**2. Description of the Related Art**

Rechargeable lithium batteries, which are typically easy to carry as well as exhibit high energy density, are widely used as power sources for mobile information terminals such as, e.g., smart phones, laptops, and the like. Rechargeable lithium batteries with high safety and high capacity for the use as power sources for hybrid vehicles and electric vehicles or for storing electric power may be advantageous.

Because commercially available rechargeable lithium batteries use electrolyte solutions including flammable organic solvents, there may be safety issues such as explosion or fire of the batteries in the event of collision, penetration, and the like. Accordingly, semi-solid-state batteries or all-solid-state rechargeable batteries that avoid the use of electrolyte solutions may be advantageous. An all-solid-state rechargeable battery is a battery in which all materials are solid, and in particular, is a battery that uses a solid electrolyte. These all-solid-state rechargeable batteries are safe because there is no or reduced risk of explosion due to electrolyte solution leakage, and all-solid-state rechargeable batteries have the advantage of being easier to manufacture in thin form.

In order to improve ionic conductivity and high-rate characteristics in existing rechargeable lithium batteries, methods of adding lithium salts to electrodes or electrolyte solutions, or increasing the concentration of lithium salts in the electrolyte solution exist. However, in all-solid-state rechargeable batteries, because non-polar or low-polar solvents are used in the manufacture of electrodes or solid electrolytes, there may be a challenge in that lithium salts do not dissolve in non-polar or low-polar solvents.

**SUMMARY**

Some example embodiments include a solid electrolyte layer for an all-solid-state rechargeable battery exhibiting desired or improved electrochemical performance, and an all-solid-state rechargeable battery including the solid electrolyte layer.

In some example embodiments, a solid electrolyte layer for an all-solid-state rechargeable battery includes a sulfide-based solid electrolyte, and a composite of a plasticizer that is solid at room temperature and liquid at a temperature greater than or equal to 60 °C and a lithium salt, wherein a content of the composite is in a range of $\geq 1$ wt% to $\leq 4$ wt% based on 100 wt% of the solid electrolyte layer.

In some example embodiments, an all-solid-state rechargeable battery includes a positive electrode, a negative electrode, and the aforementioned solid electrolyte layer between the positive electrode and the negative electrode, wherein the positive electrode comprises a positive electrode current collector and a positive electrode active material layer located on the positive electrode current collector and including a positive electrode active material and a sulfide-based solid electrolyte, and the average particle diameter ($D_{50}$) of the sulfide-based solid electrolyte included in the positive electrode active material layer is smaller than the average particle diameter ($D_{50}$) of the sulfide-based solid electrolyte included in the solid electrolyte layer.

The solid electrolyte layer for an all-solid-state rechargeable battery according to some example embodiments, and an all-solid-state rechargeable battery including the solid electrolyte layer, can have improved ionic conductivity and high-rate characteristics.

**BRIEF DESCRIPTION OF THE DRAWINGS**

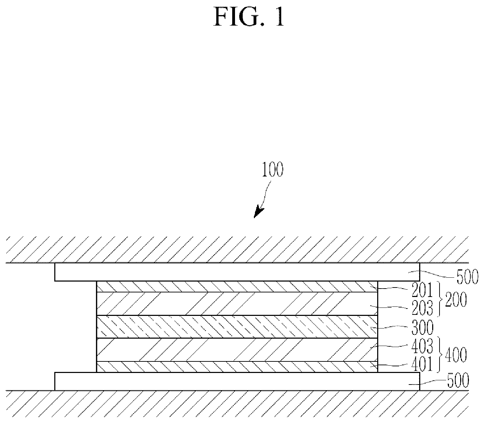

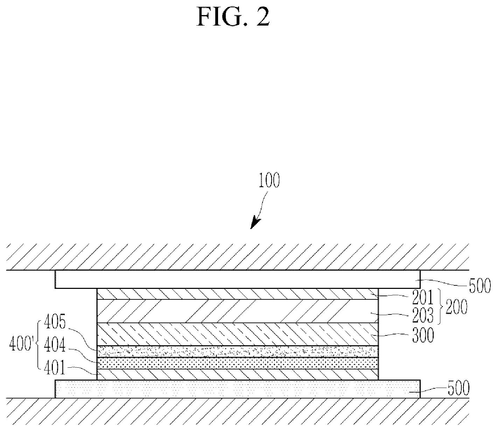

FIGS. 1 and 2 are cross-sectional views schematically illustrating all-solid-state rechargeable battery structures, according to some example embodiments.

**DETAILED DESCRIPTION**

Hereinafter, example embodiments are described in detail so that those of ordinary skill in the art can readily implement the example embodiments. However, this disclosure may be embodied in many different forms and is not construed as limited to the example embodiments set forth herein.

The terminology used herein is used to describe example embodiments only, and is not intended to limit the present disclosure. The singular expression includes the plural expression unless the context clearly dictates otherwise.

As used herein, "combination thereof" means a mixture, a laminate, a composite, a copolymer, an alloy, a blend, a reaction product, and the like of the constituents.

Herein, it should be understood that terms such as "comprises," "includes," or "have" are intended to designate the presence of an embodied feature, number, step, element, or a combination thereof, but it does not preclude the possibility of the presence or addition of one or more other features, number, step, element, or a combination thereof.

In the drawings, the thickness of layers, films, panels, regions, etc., may be exaggerated for clarity and like reference numerals designate like elements throughout the specification. It is understood that when an element such as a layer, film, region, or substrate is referred to as being "on" another element, it can be directly on the other element or intervening elements may also be present. In contrast, when an element is referred to as being "directly on" another element, there are no intervening elements present.

In addition, "layer" herein includes not only a shape formed on the whole surface when viewed from a plan view, but also a shape formed on a partial surface.

In addition, the average particle diameter may be measured by a method known to those skilled in the art, for example, may be measured by a particle size analyzer, or may be measured by a transmission electron microscope image or a scanning electron microscope image. Alternatively, it is possible to obtain an average particle diameter value by measuring using a dynamic light scattering method, performing data analysis, counting the number of particles for each particle size range, and calculating from this. Unless otherwise defined, the average particle diameter may mean the diameter ($D_{50}$) of particles having a cumulative volume of 50 volume% in the particle size distribution. As used herein, when a definition is not otherwise provided, the average particle diameter means a diameter ($D_{50}$) of particles having a cumulative volume of 50 volume% in the particle size distribution that is obtained by measuring the size (diameter or length of the major axis) of $\geq 20$ particles at random in a scanning electron microscope image.

Herein, "or" is not to be construed as an exclusive meaning, for example, "A or B" is construed to include A, B, A+B, and the like.

"Metal" is interpreted as a concept including ordinary metals, transition metals and metalloids (semi-metals).

When the terms "about" or "substantially" are used in this specification in connection with a numerical value, it is intended that the associated numerical value include a tolerance of $\pm 10\%$ around the stated numerical value. When ranges are specified, the range includes all values therebetween such as increments of 0.1%.

## Solid Electrolyte Layer for All-solid-state Rechargeable Battery

In some example embodiments, a solid electrolyte layer includes a sulfide-based solid electrolyte, and a composite of a plasticizer and a lithium salt.

### Sulfide-based Solid Electrolyte

The solid electrolyte layer includes a sulfide-based solid electrolyte having desired or improved ionic conductivity.

When the solid electrolyte included in the above solid electrolyte layer is not a sulfide-based solid electrolyte but an oxide-based solid electrolyte, a high-temperature sintering process at a temperature greater than or equal to 700 °C is performed when manufacturing the solid electrolyte layer, and the plasticizer according to some example embodiments is vaporized or decomposed, so that the effect resulting from the use of the plasticizer cannot be obtained.

The sulfide-based solid electrolyte may include for example at least one of $Li_2S$-$P_2S_5$, $Li_2S$-$P_2S_5$-LiX (wherein X is a halogen element, for example Cl, Br, or I), $Li_2S$-$P_2S_5$-$Li_2O$, $Li_2S$-$P_2S_5$-$Li_2O$-LiI, $Li_2S$-$SiS_2$, $Li_2S$-$SiS_2$-LiI, $Li_2S$-$SiS_2$-LiBr, $Li_2S$-$SiS_2$-LiCl, $Li_2S$-$SiS_2$-$B2S_3$-LiI, $Li_2S$-$SiS_2$-$P2S_5$-LiI, $Li_2S$-$B2S_3$, $Li_2S$-$P2S_5$-$Z_mS_n$ (wherein m and n is each an integer and Z is Ge, Zn, or Ga), $Li_2S$-$GeS_2$, $Li_2S$-$SiS_2$-$Li_3PO_4$, and $Li_2S$-$SiS_2$-$Li_pMO_q$ (wherein p and q each an integer and M is P, Si, Ge, B, Al, Ga, or In).

Such a sulfide-based solid electrolyte may be obtained by, for example, mixing $Li_2S$ and $P_2S_5$ in a mole ratio in a range of $\geq 50{:}50$ to $\leq 90{:}10$ or $\geq 50{:}50$ to $\leq 80{:}20$, and optionally performing a heat treatment. Within the above mixing ratio range, a sulfide-based solid electrolyte having desired or improved ionic conductivity may be prepared. The ionic conductivity may be further improved by adding at least one of $SiS_2$, $GeS_2$, $B_2S_3$, and the like as other components thereto.

Mechanical milling or a solution method may be applied as a mixing method of sulfur-containing raw materials for preparing a sulfide-based solid electrolyte. The mechanical milling is to make starting materials into particulates by putting the starting materials in a ball mill reactor and briskly stirring the starting materials. The solution method may be performed by mixing the starting materials in a solvent to obtain a solid electrolyte as a precipitate. In addition, in the case of heat treatment after mixing, crystals of the solid electrolyte may be more robust, and ionic conductivity may be improved. For example, the sulfide-based solid electrolyte may be prepared by mixing sulfur-containing raw materials, and performing a heat treatment two or more times. In this case, a sulfide-based solid electrolyte having high ionic conductivity and robustness may be prepared.

The sulfide-based solid electrolyte according to some example embodiments, for example, may be prepared through a first heat treatment of mixing sulfur-containing raw materials and firing the sulfur-containing raw materials at a temperature in a range of $\geq 120\,°C$ to $\leq 350\,°C$ and a second heat treatment of mixing the resultant of the first heat treatment and firing the resultant of the first heat treatment at a temperature in a range of $\geq 350\,°C$ to $\leq 800\,°C$. The first heat treatment and the second heat treatment may be performed in an inert gas or nitrogen atmosphere, respectively. The first heat treatment may be performed for $\geq 1$ hour to $\leq 10$ hours, and the second heat treatment may be performed for $\geq 5$ hours to $\leq 20$ hours. Small raw materials may be milled through the first heat treatment, and a final solid electrolyte can be synthesized through the second heat treatment. Through such two or more heat treatments, a sulfide-based solid electrolyte having high ionic conductivity and high performance can be obtained, and such a solid electrolyte may be suitable for mass production. The temperature of the first heat treatment may be, for example, in a range of $\geq 150\,°C$ to $\leq 330\,°C$, or $\geq 200\,°C$ to $\leq 300\,°C$, and the temperature of the second heat treatment may be, for example, in a range of $\geq 380\,°C$ to $\leq 700\,°C$, or $\geq 400\,°C$ to $\leq 600\,°C$.

For example, the sulfide-based solid electrolyte may include argyrodite-type sulfide. The argyrodite-type sulfide may be represented by, for example, a chemical formula of $Li_aM_bP_cS_dA_e$ (wherein a, b, c, d, and e are all in a range of 0 or more and 12 or less, M is or includes at least one of Ge, Sn, and Si, and A is or includes at least one of F, Cl, Br, and I), and as an example, may be represented by a chemical formula of $Li_{7-x}PS_{6-x}A_x$ (wherein x is in a range of 0.2 or more and 1.8 or less, and A is or includes at least one of F, Cl, Br, and I). The argyrodite-type sulfide may be or include $Li_3PS_4$, $Li_7P_3S_{11}$, $Li_7PS_6$, $Li_6PS_5Cl$, $Li_6PS_5Br$, $Li_{5.8}PS_{4.8}Cl_{1.2}$, $Li_{6.2}PS_{5.2}Br_{0.8}$, and the like.

The sulfide-based solid electrolytes including such an argyrodite-type sulfide may have high ionic conductivity close to the range of $\geq 10^{-4}$ to $\leq 10^{-2}$ S/cm, which is the ionic conductivity of general liquid electrolytes at room temperature, and may form an intimate bond between the active material and the solid electrolyte without causing a decrease in ionic conductivity, and may also form an intimate interface between the electrode and the solid electrolyte layer. An all-solid-state rechargeable battery including the same may have improved battery performance such as rate capability, coulombic efficiency, and cycle-life characteristics.

The argyrodite-type sulfide-based solid electrolyte may include, for example, a compound represented by Chemical Formula 1.

Chemical Formula 1: $(Li_aM^1_bM^2_c)(P_dM^3_e)(SrM^4_g)X_h$

In Chemical Formula 1, $4 \leq a \leq 8$, $M^1$ is or includes at least one of Mg, Ca, Cu, and Ag, $0 \leq b < 0.5$, $M^2$ is or includes at least one of Na, and K, $0 \leq c < 0.5$, $M^3$ is or includes at least one of Sn, Zn, Si, Sb, and Ge, $0 < d < 4$, $0 \leq e < 1$, $M^4$ is or includes at least one of N, O, and $SO_b$, $1.5 \leq n \leq 5$, $3 \leq f \leq 12$, $0 \leq g < 2$, X is or includes at least one of F, Cl, Br, and I, and $0 \leq h \leq 2$.

For example, the halogen element (X) may be included in Chemical Formula 1, and in this case, it may be expressed as $0 < h \leq 2$. For example, $M^1$ element may be included in Chemical Formula 1, and in this case, may be expressed as $0 < b < 0.5$. In Chemical Formula 1, $M^3$ may be understood as an element substituted for P, and $0 < e < 1$. In Chemical Formula 1, $M^4$ is substituted for S, and for example $0 < g < 2$, and f, a ratio of S, may be for example $3 \leq f \leq 7$. When $M^4$ is $SO_n$, $SO_n$ and may be or include for example $S_4O_6$, $S_3O_6$, $S_2O_3$, $S_2O_4$, $S_2O_5$, $S_2O_6$, $S_2O_7$, $S_2O_3$, $SO_4$, $SOs$, and the like.

For example, in Chemical Formula 1, $a+b+c+h=7$, $d+e=1$, and $f+g+h=6$.

As an example, the argyrodite-type sulfide-based solid electrolyte particles may include at least one of $Li_3PS_4$, $Li_7P_3S_{11}$, $Li_7PS_6$, $Li_6PS_5Cl$, $Li_6PS_5Br$, $Li_{5.8}PS_{4.8}Cl_{1.2}$, $Li_{6.2}PS_{5.2}Br_{0.8}$, $Li_{5.75}PS_{4.75}Cl_{1.25}$, $(Li_{5.69}Cu_{0.06})PS_{4.75}Cl_{1.25}$, $(Li_{5.72}Cu_{0.03})PS_{4.75}Cl_{1.25}$, $(Li_{5.69}Cu_{0.06})P(S_{4.70}(SO_4)_{0.05})Cl_{1.25}$, $(Li_{5.69}Cu_{0.06})P(S_{4.60}(SO_4)_{0.15})Cl_{1.25}$, $(Li_{5.72}Cu_{0.03})P(S_{4.725}(SO_4)_{0.025})Cl_{1.25}$, $(Li_{5.72}Na_{0.03})P(S_{4.725}(SO_4)_{0.025})Cl_{1.25}$, and $Li_{5.75}P(S_{4.725}(SO_4)_{0.025})Cl_{1.25}$.

The argyrodite-type sulfide-based solid electrolyte may be prepared, for example by mixing lithium sulfide and phosphorus sulfide, and optionally lithium halide. Heat treatment may be performed after mixing the lithium sulfide and phosphorus sulfide, and optionally the lithium halide. The heat treatment may include, for example, two or more heat treatment steps. Herein, preparing the argyrodite-type sulfide-based solid electrolyte may include, for example, a first heat treatment in which raw materials are mixed and fired at a temperature in a range of $\geq 120\,°C$ to $\leq 350\,°C$, and a second heat treatment in which the resultant of the first heat treatment is mixed again and fired at a temperature in a range of $\geq 350\,°C$ to $\leq 800\,°C$.

The sulfide-based solid electrolyte may be in the form of, or include, particles, and the average particle diameter $(D_{50})$ of the particles may be less than or equal to $\leq 5.0\,\mu m$, for example, $\geq 0.1\,\mu m$ to $\leq 5.0\,\mu m$, $\geq 0.5\,\mu m$ to $\leq 5.0\,\mu m$, $\geq 1.5\,\mu m$ to $\leq 5.0\,\mu m$, $\geq 1.5\,\mu m$ to $\leq 4.0\,\mu m$, $\geq 1.5\,\mu m$ to $\leq 3.0\,\mu m$, $\geq 1.5\,\mu m$ to $\leq 2.5\,\mu m$, or $\geq 1.5\,\mu m$ to $\leq 2.3\,\mu m$. The solid electrolyte may be small particles having a size in a range of $\geq 0.1\,\mu m$ to $\leq 1.5\,\mu m$, large particles having a size of $\geq 1.5\,\mu m$ to $\leq 5.0\,\mu m$, or a mixture thereof. The average particle diameter of the sulfide-based solid electrolyte particles may be measured using an electron microscope image, and for example, a particle size distribution may be obtained by measuring the size (diameter or length of the major axis) of $\geq 20$ particles in a scanning electron microscope image, and $D_{50}$ may be calculated therefrom.

In some example embodiments, the sulfide-based solid electrolyte is in the form of, or include, particles, and the average particle diameter ($D_{50}$) of the particles may be large particles in the range of $\geq 1.5\ \mu m$ to $\leq 5.0\ \mu m$, $\geq 1.5\ \mu m$ to $\leq 4.0\ \mu m$, $\geq 1.5\ \mu m$ to $\leq 3.0\ \mu m$, $\geq 1.5\ \mu m$ to $\leq 2.5\ \mu m$, or $\geq 1.0\ \mu m$ to $\leq 2.3\ \mu m$.

The sulfide-based solid electrolyte may be included in an amount in a range of $\geq 90$ wt% to $\leq 99$ wt%, $\geq 92$ wt% to $\leq 99$ wt%, $\geq 94$ wt% to 99 wt%, $\geq 96$ wt% to $\leq 99$ wt%, or $\geq 96$ wt% to $\leq 98$ wt% based on 100 wt% of the solid electrolyte layer.

Composite

In order to increase lithium ionic conductivity of a solid electrolyte layer, a method of adding a lithium salt to the solid electrolyte layer may be considered. However, because a conventional solid electrolyte layer for an all-solid-state rechargeable battery in general uses a non-polar or low-polar solvent in the manufacturing process, and the lithium salt has low solubility in this solvent, when the solid electrolyte layer is formed by including the lithium salt, the lithium salt is not ionized, making it challenging to improve the ionic conductivity. In addition, when a polar solvent capable of dissolving the lithium salt is included to form the solid electrolyte layer, the polar solvent may undergo a reaction with a solid electrolyte, possibly causing another challenge of deteriorating the solid electrolyte.

On the other hand, a solid electrolyte layer according to some example embodiments addresses the above problems by including a composite of the lithium salt with a plasticizer, and exhibits improved ionic conductivity and high rate capability. In other words, as described below, the lithium salt is ionized and is within the plasticizer, thereby improving ionic conductivity. In addition, because lithium cations formed as the lithium salt is dissolved may capture partial negative charges present in the plasticizer, even when the plasticizer comes into contact with an electrolyte, there may be no reaction with the solid electrolyte due to no sites reacting with the electrolyte, thereby causing no reaction of the plasticizer with the solid electrolyte.

The plasticizer is characterized by being solid at room temperature but liquid at $\geq 60$ °C or higher. The phase "being liquid at $\geq 60$ °C or higher" refers to a physical state at a temperature of $\geq 60$ °C or higher under a reference pressure of $\geq 1$ atmosphere (atm) or 101.3 kPa. Herein, the room temperature refers to a temperature in a range of $\geq 20$ °C to $\leq 25$ °C, for example, $\geq 25$ °C.

When a material that can change a state thereof based on a temperature, particularly, being solid at room temperature but liquid at $\geq 60$ °C or higher, is included as a plasticizer, the plasticizer may be in a solid state at the room temperature, but may become liquefied in a composite formation process performed at $\geq 60$ °C, and thus allow the lithium salt to be readily dissolved. Subsequently, after applying a slurry including the composite on a substrate, when a temperature is increased in the subsequent drying and compression processes, the plasticizer in the composite may be liquefied and fill pores in the solid electrolyte layer, but when the battery temperature is reduced again to room temperature, the plasticizer may be converted again to a solid, for example, a soft glassy solid, which may further promote the movement of lithium ions, thereby maintaining properties of the solid electrolyte layer.

On the other hand, when a material not changing the state thereof based on a temperature, for example, existing as a liquid both at room temperature and at $\geq 60$ °C or higher, is included as a plasticizer, the plasticizer may react with a solid electrolyte, deteriorating properties of the solid electrolyte.

The plasticizer may have a property of dissolving a lithium salt.

Accordingly, when the plasticizer and the lithium salt are mixed at a temperature of $\geq 60$ °C or higher where the plasticizer is liquefied, the lithium salt may be ionized and present within the plasticizer. For example, when the plasticizer and the lithium salt are mixed as at a temperature of $\geq 60$ °C or higher, the plasticizer may be in a liquid state, and the lithium salt may dissolved in the plasticizer to form a mixed solution in which the lithium salt may be in a dissolved and ionized (solvated) state within the plasticizer.

Accordingly, the lithium salt in the composite according to some example embodiments may be ionized and remain within the plasticizer.

In addition, the plasticizer may be liquefied in the manufacturing process of the composite under a condition of increasing a temperature in compression and drying processes and thus filled in pores in a solid electrolyte layer, so that the lithium salt ionized in the plasticizer may substantially uniformly and densely exist in the solid electrolyte layer, thereby improving ionic conductivity.

The plasticizer is not particularly limited as long as it exists in a solid state at room temperature and in a liquid state at a temperature of $\geq 60$ °C or higher. For example, the plasticizer may include an alkyl dinitrile compound (wherein the alkyl group has 2 to 10 carbon atoms); an alkylene carbonate (wherein the alkylene group has 2 to 6 carbon atoms); an organic phosphate compound; a polyester; a polyether; or combinations thereof.

Examples of the alkyl dinitrile compounds (wherein the alkyl has 2 to 10 carbon atoms) include malononitrile and succinonitrile. Examples of the alkylene carbonates (wherein the alkylene has 2 to 6 carbon atoms) include ethylene carbonate. Examples of the organic phosphate compounds include triphenyl phosphate (TPP), cresyl diphenyl phosphate, 2-ethylhexyl diphenyl phosphate, and tris(2-ethylhexyl) phosphate (TEHP).

Examples of the polyesters include polycaprolactone (PCL), polybutylene adipate (PBA), polyhexamethylene adipate (PHMA), and poly($\varepsilon$-caprolactone)-co-poly(lactide) copolymers. Examples of the polyethers include polyethylene glycol (PEG) and poly(tetrahydrofuran) (PTHF).

In one embodiment, the plasticizer may include malononitrile, succinonitrile, ethylene carbonate, triphenyl phosphate (TPP), cresyl diphenyl phosphate, 2-ethylhexyl diphenyl phosphate, tris(2-ethylhexyl) phosphate (TEHP), polycaprolactone (PCL), polybutylene adipate (PBA), polyhexamethylene adipate (PHMA), poly($\varepsilon$-caprolactone)-co-poly(lactide) copolymer, polyethylene glycol (PEG), poly(tetrahydrofuran) (PTHF), or combinations thereof. Among these, the polyethylene glycol may have an average molecular weight (Mw) of about 2,000 to 4,000 g/mol.

Such a plasticizer does not react with the sulfide-based solid electrolyte, and thus, prevents degradation or decomposition of the solid electrolyte, thereby avoiding deterioration of battery performance.

Lithium Salt

The solid electrolyte layer according to some example embodiments can improve ionic conductivity by including a lithium salt to enhance lithium ion mobility of the solid electrolyte layer.

The lithium salts may include at least one of LiSCN, LiN(CN)$_2$, Li(CF$_3$SO$_2$)$_3$C, LiC$_4$F$_9$SO$_3$, LiN(SO$_2$CF$_2$CF$_3$)$_2$, LiCl, LiF, LiBr, LiI, LiB(C$_2$O$_4$)$_2$, LiBF$_4$, LiBF$_3$(C$_2$F$_5$), lithium bis(oxalato)borate (LiBOB), lithium oxalyldifluoroborate (LIODFB), lithium difluoro(oxalato)borate (LiDFOB), ithium difluorobis(oxalato)phosphate (LiDFBOP), lithium bis(trifluoro methanesulfonyl)imide (LiTFSI, LiN(SO$_2$CF$_3$)$_2$), lithium bis(fluorosulfonyl)imide (LiFSI, LiN(SO$_2$F)$_2$), LiCF$_3$SO$_3$, LiAsF$_6$, LiSbF$_6$, and LiClO$_4$.

In addition, the lithium salt may be or include an imide type, and for example, the imide type lithium salt may include at least one of lithium bis(trifluoro methanesulfonyl)imide (LiTFSI, LiN(SO$_2$CF$_3$)$_2$), and lithium bis(fluorosulfonyl) imide (LiFSI, LiN(SO$_2$F)$_2$).

A content of the composite may be in a range of $\geq 1$ wt% to $\leq 4$ wt% based on 100 wt% of the solid electrolyte layer. For example, based on 100 wt% of the solid electrolyte layer, the content of the composite may be greater than or equal to 1 wt%, greater than or equal to 2 wt%, greater than or equal to 3 wt%, or greater than or equal to 4 wt%, and may be less than or equal to $\leq 4$ wt%, less than or equal to $\leq 3$ wt%, less than or equal to $\leq 2$ wt%, or less than or equal to $\leq 1$ wt%. When the content of the composite in the solid electrolyte layer satisfies any of the above ranges, the ionic conductivity can be further improved without deteriorating the physical properties of the solid electrolyte layer. For example, when the composite is included in an amount of less than $\geq 1$ wt%, the effect of improving ionic conductivity or high rate capability may not be obtained, and when the composite is included in an amount of more than 4 wt%, the ionic conductivity, high rate capability, and capacity characteristics may rather deteriorate, and for example, a short circuit may occur, or it may be impossible to manufacture a substantially uniform solid electrolyte slurry, making it challenging to manufacture a solid electrolyte layer.

A weight ratio of the plasticizer and the lithium salt in the above composite may be in a range of $\geq 1:9$ to $\leq 9:1$. For example, the weight ratio of the plasticizer to the lithium salt in the composite may be $\geq 2:8$ to $\leq 9:1$, $\geq 3:7$ to $\leq 9:1$, $\geq 4:6$ to $\leq 9:1$, $\geq 4:6$ to $\leq 8:2$, $\geq 5:5$ to $\leq 8:2$, $\geq 5.5:4.5$ to $\leq 8:2$, $\geq 6:4$ to $\leq 8:2$, or $\geq 6:4$ to $\leq 7:3$. According to some example embodiments, the weight ratio of the plasticizer and the lithium salt in the composite may be $\geq 4:6$ to $\leq 8:2$, $\geq 5:5$ to $\leq 8:2$, $\geq 5.5:4.5$ to $\leq 8:2$, $\geq 6:4$ to $\leq 8:2$, or $\geq 6:4$ to $\leq 7:3$. When the weight ratio of the plasticizer and the lithium salt in the composite satisfies the above range, the lithium salt may be ionized and advantageously present in the plasticizer, and may sufficiently contribute to improving the ionic conductivity of the solid electrolyte layer.

Other

The solid electrolyte layer according to some example embodiments may further include a binder.

The binder may include a styrene-butadiene rubber, polytetrafluoroethylene, polyvinylidene fluoride, polyethylene, an acrylate-based polymer, or a combination thereof, but is not limited thereto, any material used as a binder in the relevant technical field may be used. The acrylate-based polymer may be butyl acrylate, polyacrylate, polymethacrylate, or a combination thereof.

The binder may be included in an amount in a range of $\geq 0.1$ wt% to $\leq 3$ wt%, for example $\geq 0.5$ wt% to $\leq 3$ wt%, or $\geq 1$ wt% to $\leq 2$ wt% based on 100 wt% of the solid electrolyte layer. When the binder is included in the above content range, the adhesive strength of the solid electrolyte layer can be increased and the durability can be improved.

The solid electrolyte layer may optionally further include an ionic liquid in addition to the aforementioned sulfide-based solid electrolyte, composite of plasticizer and lithium salt, and binder.

The ionic liquid has a melting point below room temperature, so it is in a liquid state at room temperature and refers to a salt or room temperature molten salt composed of ions alone.

The ionic liquid may be or include a compound including at least one cation such as or including at least one of a) ammonium-based, pyrrolidinium-based, pyridinium-based, pyrimidinium-based, imidazolium-based, piperidinium-based, pyrazolium-based, oxazolium-based, pyridazinium-based, phosphonium-based, sulfonium-based, or triazolium-based cation, and a mixture thereof, and at least one anion such as or including at least one of BF$_4$$^-$, PF$_6$$^-$, AsF$_6$$^-$

, $SbF_6^-$, $AlCl_4^-$, $HSO_4^-$, $ClO_4^-$, $CH_3SO_3^-$, $CF_3CO_2^-$, $Cl^-$, $Br^-$, $I^-$, $BF_4^-$, $SO_4^-$, $CF_3SO_3^-$, $(FSO_2)_2N^-$, $(C_2F_5SO_2)_2N^-$, $(C_2F_5SO_2)(CF_3SO_2)N^-$, and $(CF_3SO_2)_2N^-$.

The ionic liquid may be or include, for example, one or more of N-methyl-N-propylpyrrolidinium bis(trifluoromethanesulfonyl)imide, N-butyl-N-methylpyrrolidium bis(3-trifluoromethylsulfonyl) imide, 1-butyl-3-methylimidazolium bis(trifluoromethylsulfonyl)amide, and 1-ethyl-3-methylimidazolium bis(trifluoromethylsulfonyl)amide.

Method for Manufacturing Solid Electrolyte Layer

A method for manufacturing a solid electrolyte layer according to an example embodiment can be manufactured performed according to a known method for manufacturing a solid electrolyte layer for an all-solid-state rechargeable battery, and as long as the method is capable of manufacturing the above-mentioned solid electrolyte layer, the method is not limited.

The solid electrolyte layer according to some example embodiments may be manufactured in the following process.

First, a plasticizer and a lithium salt may be mixed to form a mixture. The mixing may be performed at a temperature where the plasticizer may be liquefied, for example, greater than or equal to 60 °C, or in a range of $\geq$ 60 °C to $\leq$ 80 °C. When the mixing is performed at the temperature at which the plasticizer becomes liquid, the plasticizer exists in a liquid state, and the lithium salt dissolves in the plasticizer such that the lithium salt may exist in an ionized state within the liquefied plasticizer in the mixture. During the mixing process, some of the lithium ions ionized from the lithium salt may form coordination bonds with polar functional groups of the plasticizer, and such coordination bond states may be maintained even after cooling, allowing the lithium ions to remain in an ionized state.

Subsequently, the mixture of the plasticizer and the lithium salt may be added to a binder solution and mixed, and subsequently cooled. This mixing also may proceed at the temperature where the plasticizer may be liquefied, for example, a temperature greater than or equal to 60 °C, or in a range of $\geq$ 60 °C to $\leq$ 80 °C. The cooling may proceed at a temperature where the plasticizer may be solidified, for example, room temperature, for example, in a range of $\geq$ 20 °C to $\leq$ 25 °C.

By introducing the mixture into the binder solution and mixing, the mixture containing the plasticizer and lithium salt can be uniformly dispersed within the binder solution. In addition, as described above, by performing the cooling process, the lithium salt can be maintained in an ionized state. By maintaining the lithium salt in the ionized state in this manner, the problem of ionization suppression in non-polar solvent-based processes can be overcome, while simultaneously preventing degradation of the solid electrolyte caused by polar solvents and securing excellent lithium ion conductivity. As a result, the electrochemical performance and stability of the solid electrolyte membrane can be improved simultaneously.

The binder solution refers to a liquid composition in which the binder is dissolved or dispersed in a solvent. The binder used in the binder solution may be of the same type as the binder applied to the aforementioned solid electrolyte membrane. The solvent of the binder solution may be isobutyl isobutyrate, xylene, toluene, benzene, hexane, or a combination thereof.

Thereafter, the obtained mixture and the solid electrolyte can be mixed at room temperature, for example, in a range of $\geq$ 20 °C to $\leq$ 25 °C, to prepare a slurry for forming a solid electrolyte layer. During this mixing process, additional solvents may be included to control viscosity, etc. This solvent may be octyl acetate, isobutyl isobutyrate, xylene, toluene, benzene, hexane, or a combination thereof.

The slurry for forming a solid electrolyte layer may be dried and compressed after the coating to form a solid electrolyte layer. The drying and compression processes may be performed at a temperature where the plasticizer may be liquefied, for example, in a range of $\geq$ 80 °C to $\leq$ 130 °C, wherein as the plasticizer in the composite may be dissolved again, the lithium salt coordinatively bonded with the plasticizer may be substantially uniformly distributed throughout the solid electrolyte layer. Herein, the composite may be filled into pores in the solid electrolyte layer, thereby improving ionic conductivity and high rate capability.

A thickness of the solid electrolyte layer may be in a range of $\geq$ 10 $\mu$m to $\leq$ 200 $\mu$m. For example, the thickness of the solid electrolyte layer may be $\geq$ 30 $\mu$m to $\leq$ 150 $\mu$m, $\geq$ 40 $\mu$m to $\leq$ 120 $\mu$m, or $\geq$ 50 $\mu$m to $\leq$ 100 $\mu$m. When the thickness of the solid electrolyte layer satisfies any of the above ranges, ionic conductivity and high rate capability may be improved without internal short circuit.

**All-solid-state Rechargeable Battery**

In some example embodiments, an all-solid-state rechargeable battery includes a positive electrode, a negative electrode, and the aforementioned solid electrolyte layer between the positive electrode and the negative electrode.

FIG. 1 is a cross-sectional view schematically illustrating an all-solid-state rechargeable battery structure, according to some example embodiments. Referring to FIG. 1, the all-solid-state rechargeable battery 100 has a structure in which an electrode assembly, in which a negative electrode 400 including a negative electrode current collector 401 and a negative electrode active material layer 403; a solid electrolyte layer 300; and a positive electrode 200 including the positive electrode active material layer 203 and a positive electrode current collector 201 are stacked, may be accommodated in a battery case. The all-solid-state rechargeable battery 100 may further include an elastic sheet 500 on the outside of at least one of the positive electrode 200 and the negative electrode 400. FIG. 1 illustrates an assembly in which two unit cells including the negative electrode 400, the solid electrolyte layer 300, and the positive electrode 200 are stacked, but three or more, for example, 2 to 100, 3 to 50, 4 to 20, and the like, may be stacked.

Positive Electrode

The positive electrode may include a positive electrode current collector, and a positive electrode active material layer on the positive electrode current collector and including a positive electrode active material.

The positive electrode collector may include, but is not limited to, at least one of aluminum, nickel, and stainless steel. In some example embodiments, the positive electrode current collector may use aluminum foil.

The positive electrode active material can be applied without limitation, as long as the positive electrode active material is commonly used in all-solid-state rechargeable batteries. For example, the positive electrode active material may be or include a compound being capable of intercalating and deintercalating lithium, and may include a compound represented by any of chemical formulas below.

$Li_aA_{1-b}X_bD_2$ ($0.90 \leq a \leq 1.8$, $0 \leq b \leq 0.5$);
$Li_aA_{1-b}X_bO_{2-c}D_c$ ($0.90 \leq a \leq 1.8$, $0 \leq b \leq 0.5$, $0 \leq c \leq 0.05$);
$Li_aE_{1-b}X_bO_{2-c}D_c$ ($0.90 \leq a \leq 1.8$, $0 \leq b \leq 0.5$, $0 \leq c \leq 0.05$);
$Li_aE_{2-b}X_bO_{4-c}D_c$ ($0.90 \leq a \leq 1.8$, $0 \leq b \leq 0.5$, $0 \leq c \leq 0.05$);
$Li_aNi_{1-b-c}Co_bX_cD_\alpha$ ($0.90 \leq a \leq 1.8$, $0 \leq b \leq 0.5$, $0 \leq c \leq 0.5$, $0 < \alpha \leq 2$);
$Li_aNi_{1-b-c}Co_bX_cO_{2-a}T_a$ ($0.90 \leq a \leq 1.8$, $0 \leq b \leq 0.5$, $0 \leq c \leq 0.05$, $0 < \alpha < 2$);
$Li_aNi_{1-b-c}Co_bX_cO_{2-a}T_2$ ($0.90 \leq a \leq 1.8$, $0 \leq b \leq 0.5$, $0 \leq c \leq 0.05$, $0 < \alpha < 2$);
$Li_aNi_{1-b-c}Mn_bX_cD_\alpha$ ($0.90 \leq a \leq 1.8$, $0 \leq b \leq 0.5$, $0 \leq c \leq 0.05$, $0 < \alpha \leq 2$);
$Li_aNi_{1-6-c}Mn_bX_cO_{2\alpha}T_\alpha$ ($0.90 \leq a \leq 1.8$, $0 \leq b \leq 0.5$, $0 \leq c \leq 0.05$, $0 < \alpha < 2$);
$Li_aNi_{1-b-c}Mn_bX_cO_{2-\alpha}T_2$ ($0.90 \leq a \leq 1.8$, $0 \leq b \leq 0.5$, $0 \leq c \leq 0.05$, $0 < \alpha < 2$);
$Li_aNi_bE_cG_dO_2$ ($0.90 \leq a \leq 1.8$, $0 \leq b \leq 0.9$, $0 \leq c \leq 0.5$, $0.001 \leq d \leq 0.1$);
$Li_aNi_bCo_cMn_dGeO_2$ ($0.90 \leq a \leq 1.8$, $0 \leq b \leq 0.9$, $0 \leq c \leq 0.5$, $0 \leq d \leq 0.5$, $0.001 \leq e \leq 0.1$);
$Li_aNiG_bO_2$ ($0.90 \leq a \leq 1.8$, $0.001 \leq b \leq 0.1$);
$Li_aCoG_bO_2$ ($0.90 \leq a \leq 1.8$, $0.001 \leq b \leq 0.1$);
$Li_aMn_{1-b}G_bO_2$ ($0.90 \leq a \leq 1.8$, $0.001 \leq b \leq 0.1$);
$Li_aMn_2G_bO_4$ ($0.90 \leq a \leq 1.8$, $0.001 \leq b \leq 0.1$);
$Li_aMn_{1-g}GgPO_4$ ($0.90 \leq a \leq 1.8$, $0 \leq g \leq 0.5$);
$QO_2$; $QS_2$; $LiQS_2$;
$V_2O_5$; $LiV_2O_5$;
$LiZO_2$;
$LiNiVO_4$;
$Li_{(3-f)}J_2(PO_4)_3$ ($0 \leq f \leq 2$);
$Li_{(3-n)}Fe_2(PO_4)_3$ ($0 \leq f \leq 2$); and
$Li_aFePO_4$ ($0.90 \leq a \leq 1.8$).

In the above chemical formulas, A is or includes at least one of Ni, Co, and Mn; X is or includes at least one of from Al, Ni, Co, Mn, Cr, Fe, Mg, Sr, V, and rare earth elements; D is or includes at least one of O, F, S, and P; E is or includes at least one of Co, and Mn; T is or includes at least one of F, S, and P; G is or includes at least one of Al, Cr, Mn, Fe, Mg, La, Ce, Sr, and V; Q is or includes at least one of Ti, Mo, and Mn; Z is or includes at least one of Cr, V, Fe, Sc, and Y; and J is or includes at least one of V, Cr, Mn, Co, Ni, and Cu.

The positive electrode active material may be or include, for example, at least one of a lithium cobalt oxide (LCO), a lithium nickel oxide (LNO), a lithium nickel cobalt oxide (NC), a lithium nickel cobalt aluminum oxide (NCA), a lithium nickel cobalt manganese oxide (NCM), a lithium nickel manganese oxide (NM), a lithium manganese oxide (LMO), or and lithium iron phosphate (LFP).

For example, the positive electrode active material may include at least one of lithium nickel-based oxide represented by Chemical Formula 2, lithium cobalt-based oxide represented by Chemical Formula 3, a lithium iron phosphate-based compound represented by Chemical Formula 4, and cobalt-free lithium nickel-manganese-based oxide represented by Chemical Formula 5.

Chemical Formula 2: $Li_{a1}Ni_{x1}M^1_{y1}M^2_{z1}O_{2-b1}X_{b1}$

In Chemical Formula 2, $0.9 \leq a1 \leq 1.8$, $0.3 \leq x1 \leq 1$, $0 \leq y1 \leq 0.7$, $0 \leq z1 \leq 0.7$, $0.9 \leq x1+y1+z1 \leq 1.1$, $0 \leq b1 \leq 0.1$, $M^1$ and $M^2$ are or include one or more of Al, B, Ba, Ca, Ce, Co, Cr, Cu, Fe, Mg, Mn, Mo, Nb, Si, Sn, Sr, Ti, V, W, and Zr, and X is or includes one or more of F, P, and S.

In Chemical Formula 2, $0.6 \leq x1 \leq 1$, $0 \leq y1 \leq 0.4$, and $0 \leq z1 \leq 0.4$ or $0.8 \leq x1 \leq 1$, $0 \leq y1 \leq 0.2$, and $0 \leq z1 \leq 0.2$.

Chemical Formula 3: $Li_{a2}CO_{x2}M^3_{y2}O_{2-b2}X_{b2}$

In Chemical Formula 3, $0.9 \leq a2 \leq 1.8$, $0.7 \leq x2 \leq 1$, $0 \leq y2 \leq 0.3$, $0.9 \leq x2+y2 \leq 1.1$, and $0 \leq b2 \leq 0.1$, $M^3$ is or includes one or more of Al, B, Ba, Ca, Ce, Cr, Cu, Fe, Mg, Mn, Mo, Ni, Se, Si, Sn, Sr, Ti, V, W, Y, Zn and Zr, and X is or includes one or more of F, P, and S.

Chemical Formula 4: $Li_{a3}Fe_{x3}M^4_{y3}PO_{4-b3}X_{b3}$

In Chemical Formula 4, $0.9 \leq a3 \leq 1.8$, $0.6 \leq x3 \leq 1$, $0 \leq y3 \leq 0.4$, $0 \leq b3 \leq 0.1$, $M^4$ is or includes one or more of Al, B, Ba, Ca, Ce, Co, Cr, Cu, Mg, Mn, Mo, Ni, Se, Si, Sn, Sr, Ti, V, W, Y, Zn and Zr, and X is or includes one or more of F, P, and S.
Chemical Formula 5:

$$Li_{a4}Ni_{x4}Mn_{y4}M^5_{z4}O_{2-b4}X_{b4}$$

In Chemical Formula 5, $0.9 \leq a2 \leq 1.8$, $0.8 \leq x4 < 1$, $0 < y4 \leq 0.2$, $0 \leq z4 \leq 0.2$, $0.9 \leq x4+y4+z4 \leq 1.1$, $0 \leq b4 \leq 0.1$, $M^5$ is or includes one or more of Al, B, Ba, Ca, Ce, Cr, Fe, Mg, Mo, Nb, Si, Sn, Sr, Ti, V, W, and Zr, and X is or includes one or more of F, P and S.

An average particle diameter ($D_{50}$) of the positive electrode active material may be in a range of $\geq 1\,\mu m$ to $\leq 25\,\mu m$, for example $\geq 3\,\mu m$ to $\leq 25\,\mu m$, $\geq 1\,\mu m$ to $\leq 20\,\mu m$, $\geq 1\,\mu m$ to $\leq 18\,\mu m$, $\geq 3\,\mu m$ to $\leq 15\,\mu m$, or $\geq 5\,\mu m$ to $\leq 15\,\mu m$. For example, the positive electrode active material may include small particles having an average particle diameter ($D_{50}$) in a range of $\geq 1\,\mu m$ to $\leq 9\,\mu m$ and large particles having an average particle diameter ($D_{50}$) in a range of $\geq 10\,\mu m$ to $\leq 25\,\mu m$. The positive electrode active material having this particle size range can be harmoniously mixed with other components within the positive electrode active material layer, and can achieve high capacity and high energy density. Herein, the average particle diameter indicates a diameter ($D_{50}$) of particles having a cumulative volume of 50 volume% in the particle size distribution that is obtained by measuring the size (diameter or length of the major axis) of $\geq 20$ particles at random in a scanning electron microscope image for positive electrode active materials.

The positive electrode active material may be in the form of secondary particles made by agglomerating a plurality of primary particles or in the form of single particles. Additionally, the positive electrode active material may have a spherical or close to spherical shape, or may have a polyhedral or irregular shape.

Meanwhile, the positive electrode active material may include a buffer layer on the surface of the particles. The buffer layer may be expressed as a coating layer, a protective layer, etc., and may be configured to lower the interfacial resistance between the positive electrode active material and the sulfide-based solid electrolyte particles. For example, the buffer layer may include lithium-metal-oxide, wherein the metal may be or include for example one or more of Al, B, Ca, Ce, Cr, Fe, Mg, Mo, Nb, Si, Sn, Sr, Ta, V, W, and Zr. The lithium-metal-oxide may improve the performance of the positive electrode active material by facilitating the movement of lithium ions and electronic conduction, and may lower the interfacial resistance between the positive electrode active material and solid electrolyte particles.

The positive electrode active material may be included in an amount in a range of $\geq 55$ wt% to $\leq 99$ wt%, for example $\geq 65$ wt% to $\leq 95$ wt%, or $\geq 75$ wt% to $\leq 91$ wt% based on 100 wt% of the positive electrode active material layer.

The positive electrode active material layer may further include an inorganic solid electrolyte.

The inorganic solid electrolyte may be or include at least one of an oxide-based solid electrolyte, a sulfide-based solid electrolyte, and a halide-based solid electrolyte, and may include, for example, a sulfide-based solid electrolyte.

The details of the sulfide-based solid electrolyte are the same as the above description for the solid electrolyte layer.

The average particle diameter ($D_{50}$) of the sulfide-based solid electrolyte included in the positive electrode active material layer may be smaller than the average particle diameter ($D_{50}$) of the sulfide-based solid electrolyte included in the solid electrolyte layer. For example, the average particle diameter ($D_{50}$) of the sulfide-based solid electrolyte included in the positive electrode active material layer may be in the range of $\geq 0.1\,\mu m$ to $\leq 1.5\,\mu m$, $\geq 0.5\,\mu m$ to $\leq 1.5\,\mu m$, $\geq 1\,\mu m$ to $\leq 1.5\,\mu m$, or $\geq 1\,\mu m$ to $\leq 1.3\,\mu m$.

For example, in the positive electrode active material layer, the positive electrode active material may be included in an amount in a range of $\geq 65$ wt% to $\leq 99$ wt% and the solid electrolyte in an amount of $\geq 1$ wt% to $\leq 35$ wt%, for example, the positive electrode active material may be included in an amount of $\geq 80$ wt% to $\leq 90$ wt% and the solid electrolyte in an

amount of $\geq 10$ wt% to $\leq 20$ wt%, based on a total weight of the positive electrode active material and the solid electrolyte.

The positive electrode active material layer may optionally further include at least one of a binder, and a conductive material.

The binder is configured to adhere the positive electrode active material particles to each other, and to properly attach the positive electrode active material to the current collector. Examples thereof may be or include at least one of polyvinyl alcohol, carboxylmethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and the like, but are not limited thereto. A content of the binder in the positive electrode active material layer may be approximately in a range of $\geq 0.1$ wt% to $\leq 5$ wt% based on 100 wt% of the positive electrode active material layer.

The conductive material is configured to impart conductivity to the electrode, and any material that does not cause chemical change, and that conducts electrons, can be included in the battery. Examples thereof may include a carbon-based material such as or including at least one of natural graphite, artificial graphite, carbon black, acetylene black, ketjen black, a carbon fiber, a carbon nanofiber, a carbon nanotube, and the like; a metal-based material including at least one of copper, nickel, aluminum, silver, etc. in a form of a metal powder or a metal fiber; and a conductive polymer such as a polyphenylene derivative. A content of the conductive material in the positive electrode active material layer may be in a range of $\geq 0$ wt% to $\leq 3$ wt%, $\geq 0.01$ wt% to $\leq 2$ wt%, or $\geq 0.1$ wt% to $\leq 1$ wt% based on 100 wt% of the positive electrode active material layer.

Negative Electrode

The negative electrode for an all-solid-state rechargeable battery includes a negative electrode current collector, and a negative electrode active material layer on the negative electrode current collector. The negative electrode active material layer includes a negative electrode active material, and may optionally further include a binder, a conductive material, or a combination thereof.

The negative electrode current collector may include one or more of a copper foil, a nickel foil, a stainless steel foil, a titanium foil, a nickel foam, a copper foam, a polymer substrate coated with a conductive metal, and a combination thereof.

The negative electrode active material includes at least one of a material that reversibly intercalates/deintercalates lithium ions, a lithium metal, a lithium metal alloy, a material capable of doping/dedoping lithium, or and transition metal oxide.

The material that reversibly intercalates/deintercalates lithium ions may include, for example crystalline carbon, amorphous carbon, or a combination thereof as a carbon-based negative electrode active material. The crystalline carbon may be irregular, substantially sheet-shaped, flake-shaped, substantially sphere-shaped, or fiber-shaped natural graphite or artificial graphite. The amorphous carbon may be or include at least one of a soft carbon, a hard carbon, a mesophase pitch carbonization product, calcined coke, and the like.

The lithium metal alloy may include an alloy of lithium and one or more of Na, K, Rb, Cs, Fr, Be, Mg, Ca, Sr, Si, Sb, Pb, In, Zn, Ba, Ra, Ge, Al, and Sn.

The material capable of doping/dedoping lithium may be or include a Si-based negative electrode active material or a Sn-based negative electrode active material. The Si-based negative electrode active material may include at least one of silicon, a silicon-carbon composite, $SiO_x$ ($0 < x \leq 2$), a Si-Q alloy (wherein Q is or includes at least one of an alkali metal, an alkaline-earth metal, a Group 13 element, a Group 14 element, a Group 15 element, a Group 16 element, a transition metal, a rare earth element, and a combination thereof, but not Si), and the Sn-based negative electrode active material may include at least one of Sn, $SnO_2$, a Sn-R alloy (wherein R is an alkali metal, an alkaline-earth metal, a Group 13 element, a Group 14 element, a Group 15 element, a Group 16 element, a transition metal, a rare earth element, and a combination thereof, but not Sn). At least one of the above listed materials may be mixed with $SiO_2$. The elements Q and R may be or include at least one of Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, and Po.

For example, the negative electrode active material may include silicon-carbon composite particles. An average particle diameter ($D_{50}$) of the silicon-carbon composite particles may be for example in a range of $\geq 0.5$ $\mu$m to $\leq 20$ $\mu$m. The average particle diameter ($D_{50}$) is measured with a particle size analyzer, and indicates a diameter of particles with a cumulative volume of 50 volume% in the particle size distribution. Silicon may be included in an amount in a range of $\geq 10$ wt% to $\leq 60$ wt%, and carbon may be included in an amount of $\geq 40$ wt% to $\leq 90$ wt% based on 100 wt% of the silicon-carbon composite particles. For example, the silicon-carbon composite particles may include a core including silicon particles, and a carbon coating layer on the surface of the core. An average particle diameter ($D_{50}$) of the silicon particles may be in a range of $\geq 10$ nm to $\leq 1$ $\mu$m, or $\geq 10$ nm to $\leq 200$ nm in the core. The silicon particles may be included as silicon alone, in the form of a silicon alloy, or in an oxidized form. The oxidized form of silicon may be represented by $SiO_x$ ($0<x<2$). In addition, a thickness of the carbon coating layer may be in a range of $\geq 5$ nm to $\leq 100$ nm.

As an example, the silicon-carbon composite particles may include a core including silicon particles and crystalline carbon, and a carbon coating layer on the surface of the core and including amorphous carbon. For example, in the silicon-carbon composite particles, amorphous carbon may not be in the core but only in the carbon coating layer. The crystalline carbon may be or include artificial graphite, natural graphite, or a combination thereof, and the amorphous carbon may be formed from or include at least one of coal-based pitch, mesophase pitch, petroleum-based pitch, coal-based oil, heavy petroleum oil, or and a polymer resin (phenolic resin, furan resin, polyimide, etc.). Herein, a content of the crystalline carbon may be in a range of $\geq 10$ wt% to $\leq 70$ wt% and a content of the amorphous carbon may be $\geq 20$ wt% to $\leq 40$ wt% based on 100 wt% of the silicon-carbon composite particles.

In the silicon-carbon composite particle, the core may include a void in the center. A radius of the void may be in a range of $\geq 30$ length% to $\leq 50$ length% of the radius of the silicon-carbon composite particle.

The aforementioned silicon-carbon composite particles effectively reduce or suppress challenges such as, e.g., volume expansion, structural collapse, or particle crushing due to charging and discharging, reduce or prevent disconnection of conductive paths, achieve high capacity and high efficiency, and is advantageous to use under a high-voltage or high-speed charging conditions.

The Si-based negative electrode active material or Sn-based negative electrode active material may be mixed with a carbon-based negative electrode active material. When using a mixture of Si-based negative electrode active material or Sn-based negative electrode active material and carbon-based negative electrode active material, a mixing ratio thereof may be in a range of $\geq 1{:}99$ to $\leq 90{:}10$ by weight.

A content of the negative electrode active material in the negative electrode active material layer may be in a range of $\geq 95$ wt% to $\leq 99$ wt% based on 100 wt% of the negative electrode active material layer.

In some example embodiments, the negative electrode active material layer further includes the binder, and optionally may further include the conductive material. A content of the binder in the negative electrode active material layer may be in a range of $\geq 1$ wt% to $\leq 5$ wt% based on 100 wt% of the negative electrode active material layer. In addition, when a conductive material is further included, the negative electrode active material layer may include $\geq 90$ wt% to $\leq 98$ wt% of the negative electrode active material, $\geq 1$ wt% to $\leq 5$ wt% of the binder, and $\geq 1$ wt% to $\leq 5$ wt% of the conductive material.

The binder is configured to adhere the negative electrode active material particles to each other, and to adhere the negative electrode active material to the current collector. The binder may be or include a water-insoluble binder, a water-soluble binder, or a combination thereof.

The water-insoluble binder may be or include at least one of polyvinyl chloride, carboxylated polyvinyl chloride, polyvinyl fluoride, an ethylene oxide-containing polymer, an ethylene propylene copolymer, polystyrene, polyvinylpyrrolidone, polyurethane, polytetrafluoro ethylene, polyvinylidene fluoride, polyethylene, polypropylene, polyamideimide, and polyimide.

The water-soluble binder may include a rubber binder or a polymer resin binder. The rubber binder may be or include at least one of a styrene-butadiene rubber, an acrylated styrene-butadiene rubber, an acrylonitrile-butadiene rubber, an acrylic rubber, a butyl rubber, and a fluororubber. The polymer resin binder may be or include at least one of polyethylene oxide, polyvinylpyrrolidone, polyepichlorohydrin, polyphosphazene, polyacrylonitrile, an ethylene propylene diene copolymer, polyvinylpyridine, chlorosulfonated polyethylene, latex, a polyester resin, an acrylic resin, a phenol resin, an epoxy resin, and polyvinyl alcohol.

When a water-soluble binder is included as the negative electrode binder, a cellulose-based compound capable of imparting viscosity as a type of thickener may be further included. As the cellulose-based compound, one or more types of carboxymethyl cellulose, hydroxypropylmethyl cellulose, methyl cellulose, or and an alkali metal salt thereof may be used. The alkali metal may be or include at least one of Na, K, and Li. The amount of the thickener may be in a range of $\geq 0.1$ parts by weight to $\leq 3$ parts by weight based on 100 parts by weight of the negative electrode active material.

The conductive material is configured to impart conductivity to the electrode, and any material that does not cause chemical change and conducts electrons may be included in the battery. Examples of the conductive material may include a carbon-based material such as or including at least one of natural graphite, artificial graphite, carbon black, acetylene black, ketjen black, a carbon fiber, a carbon nanofiber, a carbon nanotube, and the like; a metal-based material of a metal powder or a metal fiber including at least one of copper, nickel, aluminum, silver, and the like; and a conductive polymer such as a polyphenylene derivative.

As another example, the negative electrode for an all-solid-state rechargeable battery may be or include a precipitation-type negative electrode. The precipitation-type negative electrode may include a negative electrode current collector, and a negative electrode coating layer on the negative electrode current collector and including at least a lithiophilic metal, and a carbon material, and may include a lithium metal layer formed by charging between the negative electrode current collector and the negative electrode coating layer. The precipitation-type negative electrode does not include a negative electrode active material during battery assembly, but may refer to a negative electrode in which lithium metal, and the like, is precipitated or electrodeposited on the negative electrode during battery charging, thereby forming a negative electrode active material.

The example details of the precipitation-type negative electrode are described below.

FIG. 2 is a schematic cross-sectional view of an all-solid-state rechargeable battery including a precipitation-type negative electrode. Referring to FIG. 2, the precipitation-type negative electrode 400' may include a negative electrode current collector 401 and a negative electrode coating layer 405 on the negative electrode current collector 401. In an all-solid-state rechargeable battery having such a precipitation-type negative electrode 400', initial charging begins in the absence of negative electrode active material, and during charging, high-density lithium metal is precipitated or electrodeposited between the negative electrode current collector 401 and the negative electrode coating layer 405, or on the negative electrode coating layer 405 to form a lithium metal layer 404, which can constitute a negative electrode active material. Accordingly, in an all-solid-state rechargeable battery that has been charged at least once, the precipitation-type negative electrode 400' may include, for example, a negative electrode current collector 401, a lithium metal layer 404 on the negative electrode current collector 401, and a negative electrode coating layer 405 on the lithium metal layer 404. The lithium metal layer 404 may be referred to herein as a layer in which lithium metal, and the like is precipitated during the charging process of the battery, and may be referred to herein as a metal layer, lithium layer, lithium electrodeposition layer, or negative electrode active material layer.

The negative electrode coating layer 405 may also be referred to herein as a lithium electrodeposition inducing layer or a negative electrode catalyst layer, and may include a metal, a carbon material, or a combination thereof that acts as a catalyst.

The metal may be or include a lithiophilic metal and may include, for example, at least one of gold, platinum, palladium, silicon, silver, aluminum, bismuth, tin, and zinc, and may be composed of one of these or various types of alloys. When the metal is present in particle form, an average particle diameter ($D_{50}$) thereof may be less than or equal to $\leq 4$ $\mu$m, for example, $\geq 10$ nm to $\leq 4$ $\mu$m.

The carbon material may be or include, for example, crystalline carbon, amorphous carbon, or a combination thereof. The crystalline carbon may be or include, for example, at least one of natural graphite, artificial graphite, and mesophase carbon microbeads. The amorphous carbon may be or include, for example, at least one of carbon black, activated carbon, acetylene black, denka black, and ketjen black.

When the negative electrode coating layer 405 includes the metal and the carbon material, the metal and the carbon material may be, for example, mixed in a weight ratio in a range of $\geq 1{:}10$ to $\leq 2{:}1$. Herein, the precipitation of the lithium metal may be effectively promoted and improve characteristics of the all-solid-state battery. The negative electrode coating layer 405 may include, for example, a carbon material on which a catalyst metal is supported, or a mixture of metal particles and carbon material particles.

The negative electrode coating layer 405 may include, for example, a lithiophilic metal and amorphous carbon, and in this case, the deposition of lithium metal may be effectively promoted. As a specific example, the negative electrode coating layer 405 may include a composite in which a lithiophilic metal is supported on amorphous carbon.

The negative electrode coating layer 405 may further include a binder, and the binder may be or include, for example, a conductive binder. Additionally, the negative electrode coating layer 405 may further include general additives such as, e.g., a filler, a dispersant, an ion conductive agent, and the like.

A thickness of the negative electrode coating layer 405 may be for example in a range of $\geq 100$ nm to $\leq 20$ $\mu$m, $\geq 500$ nm to $\leq 10$ $\mu$m, or $\geq 1$ $\mu$m m to $\leq 5$ $\mu$m.

The precipitation-type negative electrode 400' may further include a thin film, for example, on the surface of the current collector, that is, between the negative electrode current collector and the negative electrode coating layer. The thin film may include an element capable of forming an alloy with lithium. The element capable of forming an alloy with lithium may be or include, for example, at least one of gold, silver, zinc, tin, indium, silicon, aluminum, bismuth, and the like, which may be used alone or an alloy of more than one. The thin film may further planarize a precipitation shape of the lithium metal layer 404, and substantially improve the characteristics of the all-solid-state rechargeable battery. The thin film may be formed, for example, via a vacuum deposition method, a sputtering method, a plating method, and the like. The thin film may have, for example, a thickness in a range of $\geq 1$ nm to $\leq 500$ nm.

The lithium metal layer 404 may include lithium metal or lithium alloy. For example, the lithium alloy may be or include at least one of Li-Al alloy, Li-Sn alloy, Li-In alloy, Li-Ag alloy, Li-Au alloy, Li-Zn alloy, Li-Ge alloy, or and Li-Si alloy.

A thickness of the lithium metal layer 404 may be in a range of $\geq 1$ $\mu$m to $\leq 500$ $\mu$m, $\geq 1$ $\mu$m to $\leq 200$ $\mu$m, $\geq 1$ $\mu$m to $\leq 100$ $\mu$m, or $\geq 1$ $\mu$m to $\leq 50$ $\mu$m. When the thickness of the lithium metal layer 404 is too thin, lithium storage may be challenging, and when the thickness of the lithium metal layer 404 is too thick, the battery volume may increase, and performance may deteriorate.

When applying such a precipitation-type negative electrode, the negative electrode coating layer 405 may be configured to protect the lithium metal layer 404 and reduce or suppress the precipitation growth of lithium dendrite. Accordingly, short circuit and capacity degradation of the all-solid-state battery may be reduced or suppressed and cycle-life characteristics can be improved.

The solid electrolyte membrane is the same as the solid electrolyte membrane described above in the solid electrolyte layer.

An all-solid-state rechargeable battery may be or include a unit cell with a structure of positive electrode/solid electrolyte layer/negative electrode, a bicell with a structure of negative electrode/solid electrolyte layer/positive electrode/solid electrolyte layer/negative electrode, or a stacked battery in which the structure of the unit cell is repeated.

The shape of the all-solid-state rechargeable battery is not particularly limited, and may be, for example, coin-shaped, button-shaped, sheet-shaped, stacked-shaped, cylindrical, flat, and the like. In addition, the all-solid-state rechargeable battery may be applied to a large-sized battery in an electric vehicle or the like. For example, the all-solid-state rechargeable battery may also be included in hybrid vehicles such as plug-in hybrid electric vehicles (PHEV). In addition, the all-solid-state rechargeable battery may be included in a field requiring a large amount of power storage, and may be used, for example, in an electric bicycle or a power tool. In addition, the all-solid-state rechargeable battery may be included in various devices such as, e.g., portable electronic devices.

Hereinafter, examples and comparative examples of the present disclosure are described. The following examples are only examples of the present disclosure, and the present disclosure is not limited to the following examples.

## Example 1.

### (1) Manufacturing of Solid Electrolyte Layer

A mixture was prepared by mixing succinonitrile as a plasticizer and $LiN(SO_2CF_3)_2$ as a lithium salt at weight ratio of 7:3 at 60 °C. In the resulting mixture, a portion of the nitrogen atoms of the nitrile groups in the plasticizer and the lithium ions from the lithium salt formed coordinate bonds, resulting in the formation of a complex.

The obtained mixture was added to a binder solution including an acrylate-based polymer having butyl acrylate as a binder and an isobutyryl isobutyrate solution (a solid content: 8 wt%) as a solvent. The mixture was stirred at 60 °C and then cooled to 20 °C, during which the plasticizer solidified, and a solution was obtained including a complex in which the lithium salt remained ionized within the solidified plasticizer, along with the binder.

The solution including the composite and the binder was mixed with an argyrodite-type solid electrolyte($Li_6PS_5Cl$, $D_{50}$=2.3μm)in an octyl acetate solvent to prepare a slurry for forming a solid electrolyte layer. Herein, the sulfide-based solid electrolyte, the composite, and the binder had a weight ratio of 96.4:2:1.6.

The slurry for forming a solid electrolyte layer was coated on a Polyethylene terephthalate (PET) substrate, and dried and compressed at 60 °C to form a solid electrolyte layer for an all-solid-state battery. In the formed solid electrolyte layer, the succinonitrile existed as a liquid, in which the lithium salt was dissolved and existed in an ionized state, wherein a content of the composite was 2 wt% based on 100 wt% of the solid electrolyte layer, and in the composite, the plasticizer and the lithium salt had a weight ratio of 7:3.

### (2) Manufacturing of All-solid-state Rechargeable Battery Cell

$LiNi_{0.8}Co_{0.1}Al_{0.1}O_2$ as a positive electrode active material, an argyrodite-type solid electrolyte ($Li_6PS_5Cl$, $D_{50}$=1.3 μm) as a solid electrolyte, polyvinylidene fluoride as a binder, and carbon nanotube as a conductive material were mixed in a weight ratio of 85:13.44:1:0.56 to prepare a composition for forming a positive electrode active material layer. A positive electrode slurry was prepared by dispersing the prepared composition for a positive electrode active material layer in octyl acetate as a solvent. The positive electrode slurry was coated on an aluminum foil current collector by using a bar coater, and dried and compressed to manufacture a positive electrode.

A negative electrode layer composition was prepared by mixing carbon black having a primary particle diameter of ≥ 30 nm and silver (Ag) having an average particle diameter of ≥ 60 nm in a weight ratio of 3:1 to prepare an Ag/C composite, and mixing the Ag/C composite, an SBR binder, and a CMC binder in a weight ratio of 91.74:2.75:5.51 in a solvent of distilled water. This negative electrode layer composition was coated on a stainless current collector by using a bar coater, and vacuum-dried to form a negative electrode coating layer on a current collector to manufacture a precipitation-type negative electrode.

The negative electrode, the solid electrolyte layer, and the positive electrode were stacked in order, and inserted into a laminate film and subjected to warm isostatic press (WIP) at 80 °C and 500 MPa for 30 minutes, manufacturing an all-solid-state rechargeable battery cell.

### Examples 2 to 5 and Comparative Examples 1 to 10.

A solid electrolyte layer and an all-solid-state rechargeable battery cell were manufactured substantially in the same manner as in Example 1, with a difference that the weight ratio of the sulfide-based solid electrolyte and the composite (plasticizer and lithium salt) based on 100 wt% of the solid electrolyte layer, the weight ratio of the plasticizer and the lithium salt within the composite, and types of the plasticizer were changed in manufacturing the solid electrolyte layer of Example 1 as shown in Table 1 below.

Table 1:

| | Content (wt%) in the final solid electrolyte layer | | | | | Type of plasticizer | Weight ratio of plasticizer and lithium salt |
|---|---|---|---|---|---|---|---|
| | Sulfide-based solid electrolyte ($Li_6PS_5Cl$) | composite | | | Binder | | |
| | | Plasticizer | Lithium salt | Total content | | | |
| Example 1 | 96.4 | 1.4 | 0.6 | 2 | 1.6 | succinonitrile | 7:3 |
| Example 2 | 97.4 | 0.7 | 0.3 | 1 | 1.6 | succinonitrile | 7:3 |
| Example 3 | 94.4 | 2.8 | 1.2 | 4 | 1.6 | succinonitrile | 7:3 |
| Example 4 | 96.4 | 1.2 | 0.8 | 2 | 1.6 | succinonitrile | 6:4 |
| Example 5 | 96.4 | 1.4 | 0.6 | 2 | 1.6 | ethylenecarbonate | 7:3 |
| Comparative Example 1 | 96.4 | 0 | 2 | 2 | 1.6 | - | - |
| Comparative Example 2 | 96.4 | 2 | 0 | 2 | 1.6 | succinonitrile | - |
| Comparative Example 3 | 98.4 | 0 | 0 | 0 | 1.6 | - | - |
| Comparative Example 4 | 98.3 | 0.07 | 0.03 | 0.1 | 1.6 | succinonitrile | 7:3 |
| Comparative Example 5 | 97.9 | 0.35 | 0.15 | 0.5 | 1.6 | succinonitrile | 7:3 |
| Comparative Example 6 | 93.4 | 3.5 | 1.5 | 5 | 1.6 | succinonitrile | 7:3 |
| Comparative Example 7 | 88.4 | 7 | 3 | 10 | 1.6 | succinonitrile | 7:3 |
| Comparative Example 8 | 96.4 | 1.4 | 0.6 | 2 | 1.6 | acetonitrile | 7:3 |
| Comparative Example 9 | 96.4 | 1.4 | 0.6 | 2 | 1.6 | ethyl acetate | 7:3 |
| Comparative Example 10 | 96.4 | 1.4 | 0.6 | 2 | 1.6 | acetone | 7:3 |

**Evaluation Example 1: Evaluation of Ionic Conductivity**

The solid electrolyte layers according to Examples 1 and 5 and Comparative Examples 1 to 10 were respectively punched into a 10 pi disk, and a torque of 10 N · m was applied thereto, preparing samples.

The samples were measured with respect to resistance through EIS (Electrochemical Impedance Spectroscopy), and the resistance was used to measure ionic conductivity, wherein the EIS measurement was performed at an amplitude of 50 mV, a frequency of 500 kHz to 50 mHz, and a temperature of 45 °C.

Herein, the ionic conductivity results of the solid electrolyte layers according to Examples 1 to 5 and the Comparative Examples 1 to 10 are shown in Table 2 below.

Table 2:

| | Ionic conductivity mS/cm: |
|---|---|
| Example 1 | 0.85 |
| Example 2 | 0.78 |
| Example 3 | 0.89 |
| Example 4 | 0.82 |
| Example 5 | 0.75 |
| Comparative Example 1 | 0.52 |
| Comparative Example 2 | 0.37 |
| Comparative Example 3 | 0.54 |

(continued)

|  | Ionic conductivity mS/cm: |
|---|---|
| Comparative Example 4 | 0.52 |
| Comparative Example 5 | 0.58 |
| Comparative Example 6 | 0.34 |
| Comparative Example 7 | - |
| Comparative Example 8 | 0.27 |
| Comparative Example 9 | 0.06 |
| Comparative Example 10 | 0.01 |

Referring to Table 2, the solid electrolyte layers according to Examples 1 to 5 exhibited improved ionic conductivity, compared with the solid electrolyte layers according to Comparative Examples 1 to 6 and 8 to 10, but in the solid electrolyte layer according to Comparative Example 7 to which an excessive content of the composite was added, a solid electrolyte layer was not possible to form. The reason for not being able to form the solid electrolyte layer is that when a content of the composite was increased, it was impossible to prepare a substantially uniform solid electrolyte slurry.

**Evaluation Example 2: Evaluation of High Rate Capability**

The all-solid-state rechargeable battery cells according to Examples 1 to 5 and Comparative Examples 1 to 10 were evaluated with respect to high rate capability.

Specifically, in a thermostat at 45 °C, the cells were charged to a voltage of 4.25 V at a constant current of 0.1 C and discharged to a voltage of 2.5 V at the constant current of 0.1 C (first cycle); charged to a voltage of 4.25 V at the constant current of 0.1 C and discharged to a voltage of 2.5 V at the constant current of 0.33 C (second cycle); and charged to a voltage of 4.25 V at the constant current of 0.1 C and discharged to the voltage of 2.5 V at the constant current of 0.1 C (third cycle).

Discharge capacity and high rate capability of the cells at each cycle are shown in Table 3. Herein, the high rate capability is calculated according to Equation 1 below.

: High rate capability (%) = Discharge capacity at 3rd cycle (1 C rate) / Discharge capacity at 1st cycle (0.1 C rate): $\times$ 100

Equation 1

Table 3:

|  | 0.1C discharge capacity (mAh/g) | 0.33C discharge capacity (mAh/g) | 1C discharge capacity (mAh/g) | High rate capability (%) |
|---|---|---|---|---|
| Example 1 | 204.7 | 188.8 | 171.3 | 83.7 |
| Example 2 | 204.2 | 188.3 | 170.2 | 83.3 |
| Example 3 | 204.6 | 188.7 | 171.5 | 83.8 |
| Example 4 | 203.9 | 187.9 | 169.8 | 83.3 |
| Example 5 | 204.1 | 187.9 | 169.6 | 83.1 |
| Comparative Example 1 | 203.7 | 187.1 | 166.8 | 81.9 |
| Comparative Example 2 | 202.2 | 179.8 | 150.5 | 74.4 |
| Comparative Example 3 | 203.5 | 187.3 | 167.0 | 82.1 |
| Comparative Example 4 | 202.6 | 187.3 | 166.9 | 82.4 |
| Comparative Example 5 | 203.1 | 188.0 | 167.1 | 82.3 |
| Comparative Example 6 | - | - | - | - |
| Comparative Example 7 | - | - | - | - |
| Comparative Example 8 | 154.0 | - | - | - |

(continued)

|  | 0.1C discharge capacity (mAh/g) | 0.33C discharge capacity (mAh/g) | 1C discharge capacity (mAh/g) | High rate capability (%) |
|---|---|---|---|---|
| Comparative Example 9 | 17.4 | 13.9 | 1.8 | 10.3 |
| Comparative Example 10 | 15.6 | 12.7 | 0.9 | 5.8 |

In Table 3, a mark of "-" indicates a case where the solid electrolyte layer failed to form, or where a solid electrolyte layer was formed but a short circuit occurred in the all-solid-state rechargeable battery.

<u>Summary</u>

Referring to Tables 2 and 3, the solid electrolyte layers of Examples 1 to 5 including a composite of a plasticizer, which was solid at room temperature and liquid at a temperature greater than or equal to 60 °C, and a lithium salt within desired ranges, were confirmed to exhibit a desired or improved ionic conductivity of 0.6 mS/cm or higher, and desired or improved battery characteristics such as high rate capability and the like without causing internal short circuits in all-solid-state rechargeable batteries.

Comparative Examples 1 to 3 not including at least either one of the lithium salt and the plasticizer, compared with Examples 1 to 5, exhibited low ionic conductivity and deteriorated high rate capability, which confirmed a failure of the mechanism where the composite which was solid within a specific temperature range but liquefied out of the specific temperature range to dissolve the lithium salt, and fill pores of the solid electrolyte layer.

On the other hand, among Comparative Examples 4 to 7, where the plasticizer and the lithium salt was adjusted to have the same weight ratio as in Example 1 but the content of the composite was adjusted to various ranges, Comparative Examples 4 to 5 including the composite in a smaller content than Examples 1 to 5 exhibited deteriorated ionic conductivity and high rate capability, but Comparative Example 6 including the composite in a larger content than Examples 1 to 5 exhibited deteriorated ionic conductivity and exhibited internal short circuits, making it impossible to measure discharge capacity, and the like. **In** addition, in Comparative Example 7 including an excessive amount of the composite, because it was impossible to obtain a uniform solid electrolyte slurry, as described above, thereby failing in forming a solid electrolyte layer, which made it impossible to measure ionic conductivity, discharge capacity, and the like.

Furthermore, the solid electrolyte layers of Comparative Examples 8 to 10, which were formed in the same manner as in Example 1 but included a plasticizer other than the plasticizer that exhibited characteristics of being solid at room temperature but liquid at 60 °C or higher, exhibited significantly low ionic conductivity, an internal short circuit, or deteriorated high rate capability, compared with Comparative Examples 1 to 3 not including at least either one of the plasticizer and the lithium salt as well as Examples 1 to 5.

Accordingly, in order to achieve a desired or improved ionic conductivity and high rate capability without causing an internal short circuit in all-solid-state rechargeable batteries, it was confirmed that a complex containing a plasticizer that is solid at room temperature but liquid at 60 °C or higher and a lithium salt should be included in the solid electrolyte membrane at a preferred content.

While this disclosure has been described in connection with what is presently considered to be practical example embodiments, it is to be understood that the disclosure is not limited to the disclosed example embodiments. On the contrary, the disclosure is intended to cover various modifications and equivalent arrangements included within the spirit and scope of the appended claims.

**Description of Symbols**

| | | | |
|---|---|---|---|
| 100: | all-solid-state rechargeable battery | 200: | positive electrode |
| 201: | positive electrode current collector | | |
| 203: | positive electrode active material layer | | |
| 300: | solid electrolyte layer | 400: | negative electrode |
| 401: | negative electrode current collector | | |
| 403: | negative electrode active material layer | | |
| 400': | precipitation-type negative electrode | 404: | lithium metal layer |
| 405: | negative electrode coating layer | 500: | elastic layer |

**Claims**

1. A solid electrolyte layer (300) for an all-solid-state rechargeable battery (100), the solid electrolyte layer (300) comprising:

   a sulfide-based solid electrolyte; and
   a composite including a plasticizer that is solid at room temperature and liquid at a temperature greater than or equal to 60 °C, and a lithium salt,
   wherein a content of the composite is in a range of $\geq 1$ wt% to $\leq 4$ wt% based on 100 wt% of the solid electrolyte layer (300).

2. The solid electrolyte layer (300) as claimed in claim 1, wherein the room temperature is in a range of $\geq 20$ °C to $\leq 25$ °C.

3. The solid electrolyte layer (300) as claimed in claim 1 or 2, wherein the sulfide-based solid electrolyte comprises argyrodite-type sulfide.

4. The solid electrolyte layer (300) as claimed in any of the claims 1 to 3, wherein the argyrodite-type sulfide comprises at least one of $Li_3PS_4$, $Li_7P_3S_{11}$, $Li_7PS_6$, $Li_6PS_5Cl$, $Li_6PS_5Br$, $Li_{5.8}PS_{4.8}Cl_{1.2}$, $Li_{6.2}PS_{5.2}Br_{0.8}$, $Li_{5.75}PS_{4.75}Cl_{1.25}$, $(Li_{5.69}Cu_{0.06})PS_{4.75}Cl_{1.25}$, $(Li_{5.72}Cu_{0.03})PS_{4.75}Cl_{1.25}$, $(Li_{5.69}Cu_{0.06})P(S_{4.70}(SO_4)_{0.05})Cl_{1.25}$, $(Li_{5.69}Cu_{0.06})P(S_{4.60}(SO_4)_{0.15})Cl_{1.25}$, $(Li_{5.72}Cu_{0.03})P(S_{4.725}(SO_4)_{0.025})Cl_{1.25}$, $(Li_{5.72}Na_{0.03})P(S_{4.725}(SO_4)_{0.025})Cl_{1.25}$, and $Li_{5.75}P(S_{4.725}(SO_4)_{0.025})Cl_{1.25}$.

5. The solid electrolyte layer (300) as claimed in any of the claims 1 to 4, wherein the sulfide-based solid electrolyte is in a form of particles, and an average particle diameter ($D_{50}$) of the particles is less than or equal to $\leq 5.0$ $\mu$m.

6. The solid electrolyte layer (300) as claimed in any of the claims 1 to 5, wherein the lithium salt in the composite is ionized and is included in the plasticizer.

7. The solid electrolyte layer (300) as claimed in any of the claims 1 to 6, wherein the plasticizer comprises an alkyl dinitrile compound (wherein the alkyl group has 2 to 10 carbon atoms); an alkylene carbonate (wherein the alkylene group has 2 to 6 carbon atoms); an organic phosphate compound; a polyester; a polyether; or combinations thereof.

8. The solid electrolyte layer (300) as claimed in any of the claims 1 to 7, wherein the plasticizer comprises malononitrile, succinonitrile, ethylene carbonate, triphenyl phosphate (TPP), cresyl diphenyl phosphate, 2-ethylhexyl diphenyl phosphate, tris(2-ethylhexyl) phosphate (TEHP), polycaprolactone (PCL), polybutylene adipate (PBA), polyhexa-methylene adipate (PHMA), poly($\varepsilon$-caprolactone)-co-poly(lactide) copolymer, polyethylene glycol (PEG), poly(tetrahydrofuran) (PTHF), or combinations thereof.

9. The solid electrolyte layer (300) as claimed in any of the claims 1 to 8, wherein the lithium salt comprises at least one of LiSCN, $LiN(CN)_2$, $Li(CF_3SO_2)_3C$, $LiC_4F_9SO_3$, $LiN(SO_2CF_2CF_3)_2$, LiCl, LiF, LiBr, LiI, $LiB(C_2O_4)_2$, $LiBF_4$, $LiBF_3(C_2F_5)$, lithium bis(oxalato)borate (LiBOB), lithium oxalyldifluoroborate (LIODFB), lithium difluoro(oxalato)borate (LiDFOB), ithium difluorobis(oxalato)phosphate (LiDFBOP), lithium bis(trifluoro methanesulfonyl)imide (LiTFSI, $LiN(SO_2CF_3)_2$), lithium bis(fluorosulfonyl)imide (LiFSI, $LiN(SO_2F)_2$), $LiCF_3SO_3$, $LiAsF_6$, $LiSbF_6$, and $LiClO_4$.

10. The solid electrolyte layer (300) as claimed in any of the claims 1 to 9, wherein a weight ratio of the plasticizer to the lithium salt in the composite is in a range of $\geq 4{:}6$ to $\leq 8{:}2$.

11. The solid electrolyte layer (300) as claimed in any of the claims 1 to 10, further comprising a binder.

12. The solid electrolyte layer (300) as claimed in any of the claims 1 to 11, wherein the binder comprises a styrene-butadiene rubber, polytetrafluoroethylene, polyvinylidene fluoride, polyethylene, an acrylate-based polymer, or a combination thereof.

13. The solid electrolyte layer (300) as claimed in any of the claims 1 to 12, wherein a thickness of the solid electrolyte layer (300) is in a range of $\geq 10$ $\mu$m to $\leq 200$ $\mu$m.

14. An all-solid-state rechargeable battery (100), comprising:

a positive electrode,

a negative electrode, and

the solid electrolyte layer (300) as claimed in any of claims 1 to 13 between the positive electrode (200) and the negative electrode (400),

wherein the positive electrode (200) comprises a positive electrode current collector (201) and a positive electrode active material layer (203) located on the positive electrode current collector (201) and including a positive electrode active material and a sulfide-based solid electrolyte, and

the average particle diameter ($D_{50}$) of the sulfide-based solid electrolyte included in the positive electrode active material layer is smaller than the average particle diameter ($D_{50}$) of the sulfide-based solid electrolyte included in the solid electrolyte layer.

15. The all-solid-state rechargeable battery (100) as claimed in claim 14, wherein:

the negative electrode (400) comprises a negative electrode current collector (401) and a negative electrode coating layer (405) located on the negative electrode current collector (401) and including at least one of a lithiophilic metal and a carbon material, and

a lithium metal layer (404) formed by charging between the negative electrode current collector (401) and the negative electrode coating layer (405).

FIG. 1

FIG. 2

Europäisches
Patentamt

European
Patent Office

Office européen
des brevets

# EUROPEAN SEARCH REPORT

**Application Number**

EP 25 19 2479

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br>Y | US 2024/186571 A1 (LEE SANG-YOUNG [KR] ET AL) 6 June 2024 (2024-06-06)<br>* paragraph [0068] *<br>* paragraph [0074] *<br>* paragraph [0088] *<br>* table 2 *<br>* claims 1-16 *<br>* examples 1-6 *<br>----- | 1-9,12, 13<br>14,15 | INV.<br>H01M4/13<br>H01M4/62<br>H01M10/052<br>H01M10/0525<br>H01M10/0562 |
| Y | KR 2024 0054817 A (SAMSUNG SDI CO LTD [KR]) 26 April 2024 (2024-04-26)<br>* paragraph [0068] *<br>* paragraph [0099] *<br>* paragraph [0102] *<br>* paragraph [0111] - paragraph [0112] *<br>* paragraph [0115] *<br>* paragraph [0134] *<br>* examples 1,2 *<br>* claims 1-12 *<br>----- | 14,15 | |
| A | KR 2024 0097526 A (SAMSUNG SDI CO LTD [KR]) 27 June 2024 (2024-06-27)<br>* paragraph [0160] - paragraph [0164] *<br>----- | 1-15 | **TECHNICAL FIELDS SEARCHED (IPC)**<br><br>H01M |

The present search report has been drawn up for all claims

| Place of search | Date of completion of the search | Examiner |
|---|---|---|
| Munich | 8 January 2026 | Kuhn, Tanja |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 19 2479

This annex lists the patent family members relating to the patent documents cited in the above-mentioned European search report.
The members are as contained in the European Patent Office EDP file on
The European Patent Office is in no way liable for these particulars which are merely given for the purpose of information.

08-01-2026

| Patent document cited in search report | Publication date | Patent family member(s) | | Publication date |
|---|---|---|---|---|
| US 2024186571 A1 | 06-06-2024 | NONE | | |
| KR 20240054817 A | 26-04-2024 | CN | 120092328 A | 03-06-2025 |
| | | EP | 4607602 A1 | 27-08-2025 |
| | | JP | 2025535449 A | 24-10-2025 |
| | | KR | 20240054817 A | 26-04-2024 |
| | | WO | 2024085344 A1 | 25-04-2024 |
| KR 20240097526 A | 27-06-2024 | CN | 120390990 A | 29-07-2025 |
| | | EP | 4641663 A1 | 29-10-2025 |
| | | JP | 2025542351 A | 25-12-2025 |
| | | KR | 20240097526 A | 27-06-2024 |
| | | WO | 2024136228 A1 | 27-06-2024 |